Europäisches Patentamt

European Patent Office

Office européen des brevets

(11) Publication number: **0 426 341 A2**

# EUROPEAN PATENT APPLICATION

(21) Application number: 90311500.4

(22) Date of filing: 19.10.90

(51) Int. Cl.5: **G01N 15/02**, G01P 5/00

(30) Priority: 03.11.89 GB 8924859

(43) Date of publication of application:
08.05.91 Bulletin 91/19

(84) Designated Contracting States:
AT BE CH DE DK ES FR GR IT LI LU NL SE

(71) Applicant: UNITED KINGDOM ATOMIC
ENERGY AUTHORITY
11 Charles II Street
London SW1Y 4QP(GB)

(72) Inventor: Gillespie, Robert Frew
3 Standford Drive
Abingdon, Oxon(GB)
Inventor: Martin, Stefan Richard
1 Lagarts Close, Hinton Waldrist
Farrington, Oxon(GB)
Inventor: Wallace-Sims, Graham Robin
Bole Cottage, Chapel Row
Bucklebury, Reading, Berks(GB)
Inventor: Hemsley, David John
114 Alexander Close, Lodge Fields
Abingdon, Oxon(GB)

(74) Representative: Mansfield, Peter Turquand et
al
United Kingdom Atomic Energy Authority
Patents Branch B329 Harwell Laboratory
Oxfordshire, OX11 0RA(GB)

(54) Particle size and velocity determination.

(57) A laser Doppler anemometry apparatus comprises means (12,14,16,20) to create two coherent light beams which intersect to define a probe volume (18), and at least two sensors to detect light scattered in different directions by a particle traversing the probe volume. The light beams are orthogonally polarized; and each sensor comprises a beam splitter (30) arranged to split the scattered light into two orthogonally plane polarized components at 45° and 135°, and two photo-detectors (34) to detect these components. For a pair of photo-detectors the pedestal signals are the same but the Doppler signals are of opposite phase; the detected signals are added (to give the pedestal) and are subtracted (to give the Doppler). The Doppler frequency indicates particle velocity, while the phase difference between Doppler signals at the two sensors indicates particle size. The pedestal signals may be utilized as trigger signals.

## PARTICLE SIZE AND VELOCITY DETERMINATION

This invention relates to a method and an apparatus for monitoring particles using scattered laser light, so as to be able to determine their sizes and velocities.

A number of different techniques are known which use the scattering of laser light in determining the size and/or velocity of particles or droplets. An interferometric technique is described in US patent 4 329 054 (Bachalo) in which two laser beams of equal size, intensity and polarization are caused to intersect so as to form a probe volume in which there is an interference pattern. Particles passing through the probe volume scatter light, and particle size is determined from the visibility factor of the Doppler signal, i.e. the fluctuations is scattered intensity. A somewhat different analysis is described by F. Durst and M. Zare in "Laser Doppler Measurements in Two Phase Flows" (Proceedings of the LDA Symposium, Copenhagen, 1975); in this case interference is considered to occur between the two light beams after being scattered by reflection or refraction by the particle. The phase difference between signals detected by two spaced detectors enables a particle's size to be determined, while the frequency of the Doppler signal enables its velocity to be determined. A similar technique is described in US patent 4 540 283 (Bachalo). However the above techniques are of limited accuracy, and have a limited dynamic range for velocity measurements.

According to the present invention there is provided an apparatus for monitoring discrete particles, the apparatus comprising means for generating two coherent light beams of the same wavelength, and means to cause the light beams to intersect and so to define a probe volume, at least one sensor arranged to receive light scattered by a particle in the probe volume, each sensor comprising means to split the scattered light into two differently polarized components and two detectors arranged to receive the two components and to generate two corresponding electrical signals, the polarization of the intersecting light beams and of the received components being arranged such that the Doppler signals in the two components are 180° out of phase, and means to generate a first output signal corresponding to the difference between the two electrical signals, and the apparatus also comprising means responsive to the first output signals from the sensor, or from two of the sensors, to determine the size of the particle.

The particles might be solid particles in a transparent medium, for example a liquid, a gas, or a vacuum, or they might be liquid droplets in a gas or in an immiscible liquid, or gas bubbles in a liquid. In every case the medium must be substantially transparent to the wavelength of the radiation used, which may be visible light or infra-red or ultra-violet light. The wavelength may be chosen to optimize the sensitivity of the apparatus to a particular particle size distribution (e.g. very small particles), or to a particular range of particle velocities, or to suit the absorption characteristics of the medium.

The light scattered by a particle consists of a high frequency Doppler signal combined with a low frequency or pedestal signal. The two detectors detect components of the scattered light for which the pedestal signals are the same but the Doppler signals are 180° out of phase, so the Doppler signal can accurately be determined by subtracting the two signals. This enables the Doppler signal received at the or each sensor to be ascertained more accurately than can be achieved using an electrical filter to separate the different frequencies; consequently it leads to a marked improvement in the ability to size particles over a much wider range of frequencies, and so a wider range of velocities.

In one embodiment at least one sensor also comprises means to generate a second output signal corresponding to the sum of the two electrical signals. This second output signal represents the pedestal signal. The particle size can be determined from the visibility of the Doppler signal, that is from the ratio of the first output signal to the second output signal.

In the preferred embodiment the apparatus comprises at least two sensors arranged to receive light scattered in different directions by a particle, and the particle size is determined from the phase difference between the first output signals from two sensors. Preferably the apparatus also comprises means to determine from the frequency of the first output signal the velocity of the particle. Desirably at least one sensor also comprises means to generate a second output signal corresponding to the sum of the two electrical signals, and the apparatus is arranged such that both the size-determining means and the velocity determining means (where provided) operate in response to the second output signal. This provides more accurate measurements, as it ensures that signals are only processed when a particle is present, so minimising the effect of noise.

The preferred arrangement is for the two intersecting light beams to be plane polarized in orthogonal directions, (say +45° and -45°), and for the received components to be plane polarized in orthogonal directions (0° and 90°) mid-way between the directions of the planes of polarization of the intersecting beams. Alternatively the intersecting beams might each be circularly polarized, but orthogonally to each other.

The apparatus desirably comprises three sensors, as this enables ambiguities in particle size due to phase differences in excess of 360° to be eliminated.

The present invention also provides a sensor unit, comprising the sensors and signal analysis means for particle sizing as described above, for use in the apparatus defined above. It also provides a method for monitoring discrete particles, the method comprising generating two coherent light beams of the same wavelength, causing the light beams to intersect and so to define a probe volume, and arranging at least one sensor to receive light scattered by a particle in the probe volume, at each sensor splitting the scattered light into two differently polarized components and generating two corresponding electrical signals, the polarization of the intersecting light beams and of the two components being arranged such that the Doppler signals in the two components are 180° out of phase, and generating a first output signal corresponding to the difference between the two electrical signals, and determining the size of the particle from the first output signals from the sensor or from two of the sensors.

The invention will now be further described, by way of example only, and with reference to the accompanying drawings in which:

Figure 1 shows a diagrammatic view of the optical components of a laser Doppler anemometry apparatus;

Figure 2 represents graphically the variation in electrical signal with time as a particle passes through the probe volume of the apparatus of Figure 1; and

Figure 3 shows a block diagram of the electronic circuitry of the apparatus of Figure 1.

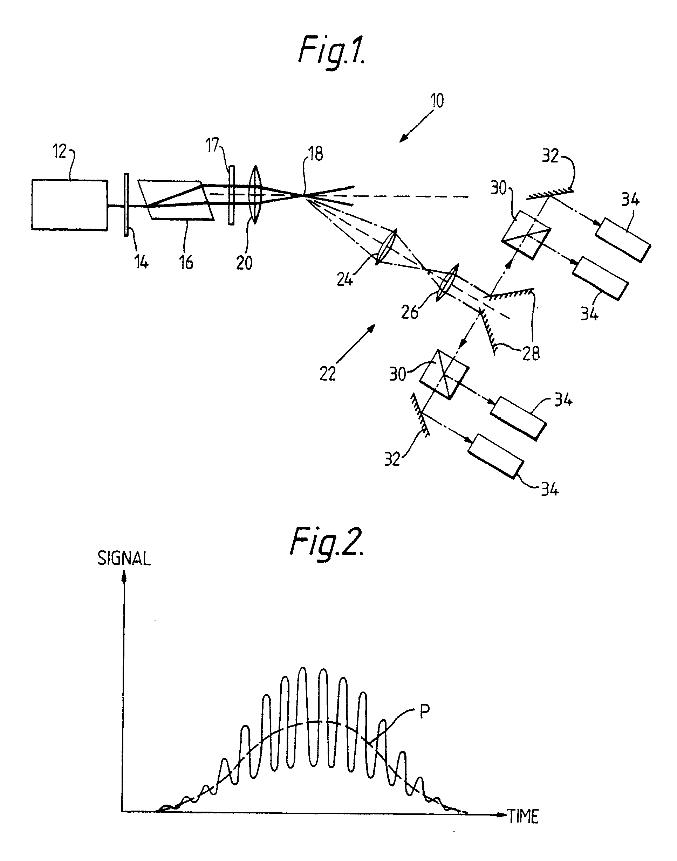

Referring to Figure 1, a laser Doppler anemometry apparatus 10 is shown, including a laser 12 which provides a coherent beam of monochromatic plane-polarized light. This beam is passed through a quarter-wave plate 14 to generate a circularly polarized beam, which ifs then passed through a calcite crystal 16 to generate two spaced apart parallel beams, polarized in orthogonal planes. These two parallel beams are passed through a half-wave plate 17 whose optical axis is at 22.5 degrees to the plane containing the two beams, so the beams become plane polarized in planes at + and -45 degrees to the plane containing the two beams. The parallel beams are caused to intersect at a focus 15 by a lens 20; the region of space in which the beams intersect is the probe volume of the apparatus 10. If any particles or droplets pass through the probe volume they will scatter light.

Light scattered by particles may be received by an off-axis optical unit 22, which is not in the plane containing the two intersecting beams. The unit 22 comprises two converging lenses 24, 26 arranged so light scattered in different directions from the focus 18 emerges as parallel beams - two light paths are indicated by chain-dotted lines. Mirrors 28 reflect such a light beam towards one or other of two polarizing beam splitters 30 which splits the beam into two orthogonal plane polarized components, polarized in planes at 45° and 135° to the plane of polarization of one of the intersecting beams at the focus 18. These components are then incident, either directly or after reflection by a mirror 32, onto two photo-detectors 34. Any one pair of photo detectors 34, along with its associated beam-splitter 30, thus receives light scattered in a particular direction by a particle in the probe volume.

No interference fringes are evident at the focus 18, because the intersecting beams are polarized orthogonally, but light from the two beams will interfere after being scattered by a particle and being given a common plane of polarization by one of the beam splitters 30. Hence as a particle moves across the probe volume the light intensity received by any one of the photo-detectors 34 fluctuates, so the electrical signal generated by the photo-detector 34 fluctuates in the same way. By way of example in Figure 2 is shown graphically the variation of signal with time for a particular particle, whose diameter is much less than the width of the focus 18. Because the intensity of each laser beam varies in a Gaussian manner across its width, the mean signal (referred to as the pedestal signal) varies in a Gaussian manner as the particle trasverses the probe volume, as indicated by the broken line P. Due to interference between light originating from the two intersecting beams there is also a high frequency Doppler signal, whose frequency depends on the velocity of the particle and so on how rapidly it traverses the probe volume. (The visibility of this Doppler signal depends on the size of the particle, smaller particles giving better visibility but a smaller intensity). Furthermore, considering light scattered in a particular direction to pass through one of the beam splitters 30, the pedestal signals P will be the same for both photo-detectors 34 but the Doppler signals will be of opposite phase.

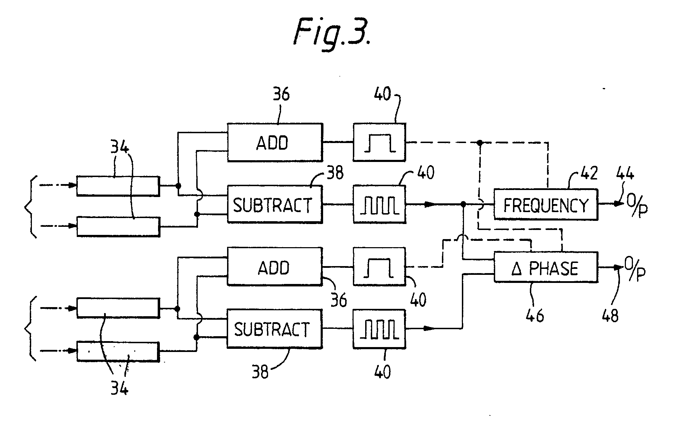

Referring now to Figure 3, the electronic circuitry for the apparatus of Figure 1 is shown as a block diagram, the two beams of light from a beam-splitter 30 being indicated by two chain-dotted lines bracketed together. In each case the electrical signals generated by the corresponding pair of photo-detectors 34 are provided to both an adding circuit 36 and to a subtracting circuit 38. The output signal from the adding circuit 36 represents the pedestal signal, P, because the Doppler signals are of opposite phase; while the output signal from the subtracting circuit 38 represents the Doppler signal alone. Each output signal is then passed to a respective pulse shaper and limiter 40, which generates a corresponding rectangular wave output of fixed amplitude but of the same phase as the output signal. The squared-off Doppler signal from one of the subtracting circuits 38 is supplied to a frequency meter 42, whose output 44 is indicative of particle velocity, while the squared-off Doppler signals from both the subtracting circuits 38 are supplied to the inputs of a phase difference meter 46 whose output 48 is indicative of particle size. The squared-off pedestal signal from the corresponding adding circuit 36 is supplied as a gate signal to the frequency meter 42, while the squared-off pedestal signals from both adding circuits 36 are supplied as gate signals to the phase difference meter 46, shown as broken lines. This ensures that the frequency meter 42 and the phase difference meter 46 operate only while pedestal signals are present, and hence while a particle is present in the probe volume.

It will be appreciated that the circuit described in relation to Figure 3 is given by way of example only, and that it might be modified in various ways. In particular the signals from all the photo-detectors 34 might be provided to a microprocessor unit (not shown) arranged to perform all the calculations and to provide outputs representing the Doppler frequency and the phase difference. It is also preferable to provide a third beam splitter 30 and pair of photo-detectors 34, to sense scattered light in a third direction; with reference to Figure 1 this might be arranged to receive light which is scattered along the optical axis of the unit 22, indicated by a broken line, and which passes between the two mirrors 28. Signals from this third pair of photo-detectors (not shown) would be analysed in the same way as described above; determining the phase difference between the Doppler signals in this third direction and those in one of the other directions enables any ambiguities due to phase differences in excess of 360° to be eliminated. The circuit described in relation to Figure 3 may also be modified by providing only one adding circuit 36, so that a pedestal signal P is obtained from only one pair of photo-detectors 34; hence only one gate signal is supplied to the phase difference meter 46.

It should also be understood that the apparatus 10 is shown diagrammatically in Figure 1 and not to scale; in particular the angular separation between the scattered light beams received by the two sensors (i.e. by the two beam splitters 30 with their pairs of photo-detectors 34) must be chosen in accordance with the expected range of particle sizes. It will also be appreciated that the mirrors 28 and 32 might be replaced by prisms with a surface at which total internal reflection occurs. The intersecting beams might be circularly polarized (though orthogonally to each other) instead of plane polarized, by replacing the half-wave plate 17 with a quarter-wave plate (not shown).

## Claims

1. An apparatus (10) for monitoring discrete particles, the apparatus comprising means (12, 16) for generating two coherent light beams of the same wavelength, and means (20) to cause the light beams to intersect and so to define a probe volume (18), and at least one sensor arranged to receive light scattered by a particle in the probe volume, characterised by each sensor comprising means (30) to split the scattered light into two differently polarized components and two detectors (34) arranged to receive the two components and to generate two corresponding electrical signals, the polarization of the intersecting light beams and of the received components being arranged such that the Doppler signals in the two components are 180° out of phase, and means (38) to generate a first output signal corresponding to the difference between the two electrical signals, and the apparatus also comprising means (46, 48) responsive to the first signals from the sensor (30, 34, 38), or from two of the sensors (30, 34, 38), to determine the size of the particle.

2. An apparatus as claimed in Claim 1 also comprising means (42, 44) to determine from the frequency of the first output signal the velocity of the particle.

3. An apparatus as claimed in Claim 1 or Claim 2 wherein at least one sensor also comprises means (36) to generate a second output signal corresponding to the sum of the two electrical signals, and the size-determining means determines the particle size from the ratio of the first output signal to the second output signal.

4. An apparatus as claimed in Claim 1 or Claim 2 wherein the apparatus comprises at least two sensors (30, 34, 38) arranged to receive light scattered in different directions by a particle, and the size-determining means (46, 48) determines the particle size from the phase difference between the first output signals from two sensors.

5. An apparatus as claimed in Claim 4 wherein at least one sensor (30, 34, 38) also comprises means (36) to generate a second output signal corresponding to the sum of the two electrical signals, and the apparatus is arranged such that the size-determining means (46, 48) operates in response to the second output signal.

6. An apparatus as claimed in Claim 5 with Claim 4 dependent upon Claim 2, wherein the velocity-determining means (42, 44) is arranged to operate in response to the second output signal.

7. An apparatus as claimed in any one of Claims 4 to 6 wherein the apparatus comprises three sensors (30, 34, 38) whereby ambiguities in particle size due to phase differences in excess of 360° are eliminated.

8. An apparatus as claimed in any one of the preceding Claims wherein the two intersecting light beams are plane polarized in orthogonal directions, and the received components are plane polarized in orthogonal directions mid-way between the directions of the planes of polarization of the intersecting beams.

9. A sensor unit for use in an apparatus for monitoring discrete particles, the apparatus comprising means (12, 16) for generating two coherent light beams of the same wavelength, and means (20) to cause the light beams to intersect and so to define a probe volume (18), the sensor unit comprising at least one sensor arranged to receive light scattered by a particle in the probe volume, characterised by each sensor comprising means (30) to split the scattered light into two differently polarized components and two detectors (34) arranged to receive the two components and to generate two corresponding electrical signals, the polarization of the intersecting light beams and of the received components being arranged such that the Doppler signals in the two components are 180° out of phase, and means (38) to generate a first output signal corresponding to the difference between the two electrical signals, and the unit also comprising means (46, 48) responsive to the first output signals from the sensor (30, 34, 38), or from two of the sensors (30, 34, 38), to determine the size of the particle.

10. A method of monitoring discrete particles, the method comprising generating two coherent light beams of the same wavelength, causing the light beams to intersect and so to define a probe volume (18), and arranging at least one sensor to receive light scattered by a particle in the probe volume, at each sensor (30, 34) splitting the scattered light into two differently polarized components and generating two corresponding electrical signals, the polarization of the intersecting light beams and of the two components being arranged such that the Doppler signals in the two components are 180° out of phase, and generating a first output signal (38) corresponding to the difference between the two electrical signals, and determining the size of the particle from the first output signals from the sensor or from two of the sensors.

11. A method as claimed in Claim 10 also comprising generating a second output signal corresponding to the sum of the two electrical signals, and either using the second output signal in determining the particle size, or using the second output signal to control the operation of determining the particle size.

# Fig.1.

# Fig.2.

# Fig.3.